# EUROPÄISCHE PATENTSCHRIFT

(11) **EP 0 897 638 B1**
(45) Veröffentlichungstag und Bekanntmachung des Hinweises auf die Patenterteilung: **12.01.2000**
(21) Anmeldenummer: 97923774.0
(22) Anmeldetag: 30.04.1997
(51) Int. Cl.: H04N 7/15

(54) **VERFAHREN ZUR AUTOMATISCHEN ZUORDNUNG EINES SPRACHSIGNALS EINES TEILNEHMERS EINER VIDEOKONFERENZ ZU SEINEM BILD**
METHOD OF AUTOMATICALLY ALLOCATING A VIDEO CONFERENCE PARTICIPANT VOICE SIGNAL TO HIS IMAGE
PROCEDE D'AFFECTATION AUTOMATIQUE A L'IMAGE D'UN PARTICIPANT A UNE VIDEOCONFERENCE, D'UN SIGNAL VOCAL EMANANT DE LUI

(30) Priorität: 10.05.1996 DE 19618944
(43) Veröffentlichungstag der Anmeldung: 24.02.1999
(73) Patentinhaber: SIEMENS AKTIENGESELLSCHAFT, 80333 München (DE)
(72) Erfinder: KROMBACH, Rainer, D-85604 Pöring (DE)
(86) Internationale Anmeldenummer: DE9700889
(87) Internationale Veröffentlichungsnummer: WO9743857

(56) Entgegenhaltungen:
- EP-A- 0 619 679
- US-A- 5 206 721

## Beschreibung

Die Erfindung betrifft ein Verfahren, das bei Videokonferenzen, insbesondere bei Multipoint-Videokonferenzen mit mehr als zwei Teilnehmern zur Anwendung kommt. Bei einer Videokonferenz sieht ein Teilnehmer seinen bzw. seine Gesprächspartner beispielsweise in verschiedenen Fenstern auf einem Bildschirm. Bei einem sehr kleinen Bildschirm oder Monitor kann immer nur das Bild eines einzigen Teilnehmers dargestellt werden, der beispielsweise durch Tastendruck des zuhörenden Teilnehmers ausgewählt wird.

Der Gesprächsablauf einer Multipoint-Videokonferenz muß entweder von einem Moderator koordiniert werden, oder es muß genaue Regeln dafür geben, wer das Wort und damit das Rederecht erhält. Somit wird bei einer Multipoint-Videokonferenz nur jeweils ein Sprachsignal eines einzigen Teilnehmers übertragen, da ja nur ein Teilnehmer zu einem Zeitpunkt ein Rederecht hat.

Dies ist von Bedeutung, weil ein zuhörender Teilnehmer nicht ausreichend schnell und einfach erkennt, wer gerade im Rahmen seines Rederechtes spricht, das heißt in welchem Fenster der sprechende Teilnehmer zu sehen ist. Bei einem kleinen Bildschirm muß der zuhörende Teilnehmer schnell genug das Bild des sprechenden Teilnehmers aufrufen. Es ist äußerst mühsam den Gesprächsverlauf zu verfolgen, wenn mehrere Teilnehmer kurz hintereinander für kurze Zeit sprechen, das heißt wenn das Rederecht häufig wechselt.

In der EP-AO 0 619 679 wird ein Multi-Videokonferenzsystem beschrieben. Es sind hierbei eine Mehrzahl von Stationen, d. h. von Endgeräten vorhanden. Eine Steuerungseinrichtung ist mit diesen Endgeräten verbunden. Die Steuerungseinrichtung 110 wählt aus den Endgeräten dasjenige aus, welches den maximalen Audiopegel abgibt. Das Bild dieser Station wird auf den anderen Endgeräten dargestellt.

In der US-A 5 206 721 wird ein Videokonferenzsystem beschrieben, bei dem eine Kamera automatisch auf einen Sprecher ausgerichtet wird. Sendeseitig wird also das Bild des sprechenden Teilnehmers erzeugt, so daß dieser Stand der Technik sich auf die Sendeseite einer Videokonferenz bezieht.

Der Erfindung liegt die Aufgabe zugrunde, ein Verfahren zur automatischen Zuordnung eines Sprachsignals eines Teilnehmers einer Videokonferenz zu seinem Bild anzugeben.

Diese Aufgabe wird erfindungsgemäß durch die im einzigen Patentanspruch angegebenen Merkmale gelöst.

Das erfindungsgemäße Verfahren läuft auf der Teilnehmerempfangsseite ab, wobei in dem entsprechenden Endgerät Bilder der Teilnehmer empfangen oder abgespeichert werden, und in dem gleichen Endgerät ein Sprachsignal eines Teilnehmers empfangen und in einer Sprechererkennungsschaltung ausgewertet wird, derart, daß das Bild des zugehörigen Teilnehmers auf dem genannten Endgerät dargestellt oder kenntlich gemacht wird.

Im folgenden wird die Erfindung anhand eines Ausführungsbeispieles erläutert.

Die Teilnehmer der Multipoint-Videokonferenz sitzen beispielsweise an einem Personalcomputer, der zusätzlich mit einer Kamera ausgestattet ist. Die Personalcomputer der Teilnehmer sind über Datenübertragungsleitungen miteinander verbunden. Wie eingangs schon erläutert, wird zu jedem Zeitpunkt nur das Sprachsignal des Teilnehmers mit Rederecht übertragen.

Erfindungsgemäß wird in einer Sprechererkennungseinrichtung der gerade sprechende Teilnehmer erkannt. Die Sprechererkennungseinrichtung kann schaltungsmäßig in den Personalcomputer integriert sein, oder sie kann durch eine entsprechende Programmsteuerung durch den Personalcomputer ausgeführt werden. Die Sprechererkennungseinrichtung weist hierzu in bekannter Weise einen Musterspeicher für Sprachmuster auf, mit denen das Sprachmuster des gerade sprechenden Teilnehmers verglichen wird. Aufgrund des Ergebnisses einer Ähnlichkeitsuntersuchung kann dieser gerade sprechende Teilnehmer identifiziert werden.

Bei einem großen Bildschirm kann das Bild des gerade sprechenden Teilnehmers markiert werden, und bei einem kleinen Monitor wird als einziges dieses Bild dargestellt. Die Bilder der Teilnehmer werden vorzugsweise durch die den Teilnehmern zugeordneten Videokameras aufgenommen.

Zu Beginn einer Videokonferenz kann eine Lernphase notwendig sein, in der die Sprachmuster der Teilnehmer mit den zugehörigen Bildern oder den Fenstern auf dem Bildschirm abgespeichert werden.

## Patentansprüche

1. Verfahren zur Zuordnung eines Sprachsignals eines Teilnehmers einer Videokonferenz zu seinem Bild,
bei dem in einem Endgerät Bilder der Teilnehmer empfangen werden oder abgespeichert sind,
bei dem in dem gleichen Endgerät ein Sprachsignal eines Teilnehmers empfangen wird,
bei dem zumindest das Bild des Teilnehmers mit Rederecht dargestellt wird, und
bei dem das empfangene Sprachsignal in einer Sprechererkennungsschaltung ausgewertet und das Bild des zugehörigen Teilnehmers dargestellt oder kenntlich gemacht wird.

## Claims

1. Method of allocating a voice signal from a participant in a video conference to his image, in which a terminal receives or stores images of the participants, in which the same terminal receives a voice signal from a participant, in which at least the image of the participant with authorization to speak is shown, and in which the received voice signal is evaluated in a speaker recognition circuit and the image of the associated participant is shown or identified.

## Revendications

1. Procédé pour associer un signal vocal d'un participant à une vidéoconférence à son image,
dans lequel des images des participants sont reçus ou mémorisés dans un terminal,
dans lequel un signal vocal d'un participant est reçu dans le même terminal,
dans lequel au moins l'image du participant ayant droit à la parole est représenté, et
dans lequel le signal vocal reçu est exploité dans un circuit de reconnaissance de locuteur et l'image du participant associé est représentée ou rendue reconnaissable.
